# EUROPEAN PATENT SPECIFICATION

(11) **EP 0 719 829 B1**
(45) Date of publication and mention of the grant of the patent: **11.04.2001**
(21) Application number: 95309261.6
(22) Date of filing: 19.12.1995
(51) Int. Cl.: C08L 23/10, C08J 5/18

(54) **Polypropylene composition and laminated and oriented film therefrom**
Polypropylenzusammensetzung sowie laminierte und orientierte Folie daraus
Composition de polypropylène et pellicule stratifiée et orientée préparée avec cette composition

(30) Priority: 22.12.1994 JP 31967394
(43) Date of publication of application: 03.07.1996
(73) Proprietor: SUMITOMO CHEMICAL COMPANY LIMITED, Osaka-shi, Osaka 541-0041 (JP)
(72) Inventor: Setoh, Ritsuo, Ichihara-shi, Chiba (JP); Satoh, Makoto, Ichihara-shi, Chiba (JP); Inagaki, Katsunari, Ichihara-shi, Chiba (JP); Ohara, Jun, Sodegaura-shi, Chiba (JP)
(74) Representative: Ablewhite, Alan James

(56) References cited:
- EP-A- 0 138 054
- EP-A- 0 252 718
- EP-A- 0 560 326

## Description

### FIELD OF THE INVENTION

The present invention relates to a polypropylene composition for a laminated and oriented film and a laminated and oriented film having this composition on a surface layer. More particularly, the present invention relates to a polypropylene composition for a laminated and oriented film and a laminated and oriented film having this propylene composition on a surface layer giving a film having an excellent balance of a solvent resistance and a hot-tack property and having an excellent film-forming property wherein it obstructs extremely rarely a transparency and a low-temperature heat-sealing property when a film is formed.

### BACKGROUND OF THE INVENTION

As a polypropylene has a superior physical property, it is used for a wide usage such as for example, a packaging film field and the like. However, as a polypropylene film has a high temperature capable of heat-sealing by a single layer and its proper range of temperature is narrow, a polypropylene random copolymer wherein ethylene and/or α-olefin is randomly copolymerized is usually used for this kind of usage in order to enhance a heat-sealing property at low temperature. Besides, a random copolymer has the good random property of comonomer, and therefore, has an excellent transparency and heat-sealing property owing to a low crystallinity and a low melting point.

On the other hand, it had a defect that a solubility to an organic solvent, for example, a saturated hydrocarbon solvent being not preferred in food sanitation increases remarkably in accordance with the increase of ethylene and/or α-olefin content,

As the process for preparing this propylene random copolymer, a try preparing a propylene random copolymer by the so-called gas phase polymerization method wherein a solvent or an active monomer liquid did not exist substantially has been done recently. However, for example, according to a method described in Japanese Unexamined Patent Publication No. 63-276541 (1988), a propylene-butene-1 copolymer being main component was prepared by a gas phase polymerization method. However, it had 15% or more of a soluble part in xylene at 20°C and made a blocking resistance and a bleed whitening property more worse, and therefore, it is not yet adequate as a film for packaging. Particularly, this defect is apt to appear in case of a film-forming with a big processing machine. Besides, it has a lot of low molecular weight component being not preferable for a film for packaging as a low temperature heat-sealing modifier. Therefore, although it has a good low temperature heat-sealing property, an attachment on a roll in case of orienting with a vertical roll when a film is prepared for a long time increases and a film-forming property becomes inferior.

Besides, although a method described in Japanese Unexamined Patent Publication No. 61-248740 (1986) improved a low temperature heat-sealing property as a composition, propylene-ethylene copolymer and propylene-ethylene-butene-1 copolymer being a main component have a high melting point of 140 °C or more owing to a low content of comonomer and the appearance of a high hot-tack strength is yet inadequate. In Japanese Unexamined Patent Publication No. 56-58861(1981), a film having an improved transparency and low temperature heat-sealing property is described, but propylene-ethylene copolymer and propylene-ethylene-butene-1 copolymer being a main component become a copolymer having a high melting point owing to a low content of comonomer and it has a problem in a hot-tack property. In Japanese Unexamined Patent Publication No. 118633 (1989), propylene-ethylene copolymer and propylene-ethylene-butene-1 copolymer being a main component are prepared by a bulk polymerization method and it is inadequate to give a preferable hot-tack property owing to a low content of comonomer.

EP-A-0 138 054 relates to a packaging propylene film consisting of a random copolymer of propylene an α-olefin having 4 or more carbon atoms or a copolymer of propylene, α-olefin and ethylene, wherein the content of cold xylene-soluble portion in the copolymer is 15-60% by weight.

EP-A-0 560 326 relates to compositions of random copolymers of propene containing an α-olefin as comonomer.

The present inventors had an extensive study on the development of this polypropylene random copolymer composition. As the results, the present inventors found that the above-mentioned purpose could be attained by a composition comprising a crystalline propylene random copolymer having a specified range of α-olefin content, propylene-α-olefin random copolymer having a specified range of α-olefin content and a specified range of a crystalline propylene homopolymer as defined below, and completed the present invention.

### SUMMARY OF THE INVENTION

An object of the present invention is to provides a polypropylene composition for a laminated and oriented film being film-formed for a long time without hurting a preferable property which a polypropylene film has originally, that is, a transparency and a heat-sealing property and having an excellent balance of a solvent resistance and a hot-tack property, and a laminated and oriented film having this composition on a surface layer.

The present invention relates to a polypropylene composition for a laminated and oriented film characterized in comprising (A) 73 to 97 % by weight of a crystalline propylene random copolymer having a propylene content of 60 to 97 % by weight, an ethylene content of 0 to 6 % by weight and a content of an α-olefin having 4 to 10 carbon atoms of 3 to 40 % by weight a soluble part in xylene at 20°C of 25% by weight or less; wherein the crystalline propylene random copolymer is obtainable by polymerising propylene and the α-olefin, or by polymerising propylene, ethylene and the α-olefin, in a gas phase using a solid catalyst component containing Ti, Mg, a halogen atom and an electron donator as essential components, (B) 2.5 to 17% by weight of a propylene-α-olefin random copolymer having a propylene content of 35 to 75 % by weight, a content of an α-olefin having 4 to 10 carbon atoms of 25 to 65 % by weight and a soluble part in xylene at 20°C of more than 70% by weight, and (C) 0.5 to 10 % by weight of a crystalline propylene polymer having a melting point measured with DSC of 150°C or more, wherein the crystalline propylene polymer (C) is a crystalline propylene homopolymer or crystalline propylene copolymer having an ethylene or but-1-ene content of less than 3% by weight; wherein the polypropylene composition has 20% by weight of soluble part in xylene at 20°C.

Besides, the present invention relates to a laminated film having the above-mentioned composition on a surface layer.

According to the present invention, there can be obtained a composition comprising a crystalline propylene random copolymer having a range of α-olefin content enough to reveal a high hot-tack strength, a propylene-α-olefin random copolymer having a little content of a low molecular weight polymer to enhance a low temperature heat-sealing property and a crystalline propylene homopolymer to enhance a hot-tack property and an excellent solvent resistance, and a film having an excellent solvent resistance and an excellent hot-tack property by laminating the said composition on one side or both side of a crystalline polypropylene film without hurting a stable film-forming property for long time, a transparency and a heat-sealing property.

### DETAILED DESCRIPTION OF THE INVENTION

The present invention is illustrated in detail as follows.

The crystalline propylene random copolymer (A) used in the polypropylene composition of the present invention is a random copolymer having a propylene content of 60 to 97 % by weight which is obtained by copolymerization of propylene with α-olefin or propylene with α-olefin and ethylene.

An α-olefin includes an α-olefin having 4 to 10 carbon atoms, for example ,butene-1, pentene-1, hexene-1, heptene-1, octene-1, 3-methyl-pentene-1 and the like. Among these, butene-1 is the most preferable.

The contents of propylene, ethylene and α-olefin in the crystalline propylene random copolymer (A) are 60 to 97 %, preferably 65 to 92 % by weight, 0 to 6 %, preferably 0 to 5 % by weight and 3 to 40 %, preferably 3 to 35 % by weight, respectively.

When the propylene content is less than 60 % by weight, a melting point is too low and the film-forming property becomes inferior. When the propylene content is more than 97 % by weight, the melting point is high and the low temperature heat-sealing property becomes insufficient. The ethylene component is not an essential component but the content of up to around 6 % by weight is preferred from the view point of the film-forming property for long time and the hot-tack strength. Besides, the content of α-olefin is preferably 3 to 40 % by weight. When the content is less than 3 ,the melting point is high and the hot-tack strength is not revealed. When the content is more than 40 % by weight, the film-forming property becomes inferior. Besides, in case of the propylene-α-olefin copolymer containing no ethylene, the content of α-olefin is preferably 15% or more by weight.

The crystalline propylene random copolymer (A) has not more than 25% by weight of a soluble part in xylene at 20°C (referred to simply as "CXS" hereinafter), more preferably 1 to 20% by weight. When the CXS is within the above range, the film-forming property of the composition and hot tack property, anti-blocking property of the laminated and oriented film are more excellent.

As the crystalline propylene random copolymer (A), a polymer wherein a random copolymer obtained by copolymerization of propylene with α-olefin is decomposed by heating or peroxide to Mw/Mn of 5.5 or less, can be preferably used.

The crystalline propylene random copolymer (A) has usually [η] of 0.3 to 6.0 dl/g, preferably [η] of 0.8 to 5.0 dl/g, and more preferably [η] of 1.0 to 3.0 dl/g.

The crystalline propylene random copolymer (A) can be prepared by copolymerization of propylene with α-olefin in gas phase with Ziegler-Natta catalyst and in certain circumstances, a soluble catalyst such as a metallocene too.

The preferable catalyst system includes a Ziegler-Natta catalyst system wherein titanium, magnesium, halogen and electron donor are at least essential, for example, a catalyst system composed of (a) a solid catalyst component comprising titanium, magnesium, halogen and electron donor as essential components, (b) an organometallic compound, and (c) a silicone compound indicated by the general formula R¹R²Si(OR³)₂ (R¹ represents an alicyclic hydrocarbon group having 5 to 20 carbon atoms and R², R³ represent hydrocarbon groups having 1 to 20 carbon atoms.)

The solid catalyst component (a) in the above-mentioned catalyst system contains titanium, magnesium, halogen and electron donor as essential components, and it is generally obtained by treating with titanium tetra chlorides after treating a solid product obtained by reducing titanium compound with an organomagnesium compound with an ester compound.

The titanium compound is represented by the general formula Ti(OR)_{b}X_{4-b} (R represents a hydrocarbon group having 1 to 20 carbon atoms, X is a halogen and b is a numeral 0 < b ≦ 4.). The examples of R are an alkyl group such as methyl, ethyl, iso-propyl, butyl, iso-butyl, amyl, iso-amyl, hexyl, heptyl, octyl, decyl, dodecyl, and the like, an aryl group such as phenyl, cresyl, xylyl, naphthyl and the like, a cycloalkyl group such as cyclohexyl, cyclopentyl and the like, an allyl group such as propenyl and the like and an aralkyl group such as benzyl and the like.

As the magnesium compound, the any type of organomagnesium compound having magnesium-carbon bond can be used. The Grignard compound represented particularly by the general formula RMgX (wherein R represents a hydrocarbon group having 1 to 20 carbon atoms and X is a halogen.) and the magnesium compound represented by the general formula RR'Mg ( wherein R and R' represent hydrocarbon groups having 1 to 20 carbon atoms and hereby R and R' may be same or different) are preferably used.

The Grignard compound includes methyl magnesium chloride, ethyl magnesium chloride, methyl magnesium bromide, ethyl magnesium bromide, ethyl magnesium iodide, propyl magnesium chloride, propyl magnesium bromide, n-butyl magnesium chloride, n-butyl magnesium bromide, sec-butyl magnesium chloride, sec-butyl magnesium bromide, tert-butyl magnesium chloride, tert-butyl magnesium bromide, amyl magnesium chloride, iso-amyl magnesium chloride, phenyl magnesium chloride, phenyl magnesium bromide and the like, and the magnesium compound represented by RR'Mg includes diethyl magnesium, di-n-propyl magnesium, di-iso-propyl magnesium, di-n-butyl magnesium, di-sec- butyl magnesium, di-tert-butyl magnesium, n-butyl-sec-butyl magnesium, diamyl magnesium, diphenyl magnesium and the like.

The organoaluminum compound (b) used in combination with the solid catalyst component has at least one aluminum-carbon bond in a molecule. The example of this organoaluminum compound (b) includes a trialkylaluminum such as triethylaluminum, triisobutylaluminum, trihexylaluminum and the like, a dialkylaluminum halide such as a diethylaluminum halide (e.g. chloride, bromide), a diisobutylaluminum halide (e.g. chloride, bromide) and the like, a mixture of trialkylaluminum and dialkylaluminum halide, almoxane such as tetraethyldialmoxane, tetrabutyldialmoxane and the like. Among these organoaluminum compounds, trialkyl aluminum, the mixture of trialkylaluminum and dialkylaluminum halide , and tetraethyldialmoxane are preferred.
Besides, the organoaluminum compound may be used in combination with a boron compound such as trityl-tetra(pentafluorophenyl)-borate and N,N'-dimethylaniliniumtetra(pentafluorophenyl)borate. The amount of the organoaluminum compound used can be selected in a wide range of 1 to 1000 mole per one atomic mole of titanium in the solid catalyst and particularly 5 to 600 mole is preferred.

The silicone compounds (c) of electron donor indicated by the general formula R¹R²Si(OR³)₂ are for example, cyclohexyldimethoxysilane, cyclohexylpropyldimethoxysilane, cyclohexylisopropyldimethoxysilane, cyclohexylbutyldimethoxysilane, cyclohexyliso-butyldimethoxysilane, cyclohexyltert-butyldimethoxysilane, cyclohexyl-pentyldimethoxysilane, cyclohexylhexyldimethoxysilane, cyclohexylethyldiethoxysilane, cyclohexylpropyldiethoxysilane, cyclohexyliso-propyldiethoxysilane, cyclohexylbutyldiethoxysilane and the like.

Propylene and α-olefin are polymerized by providing hydrogen in order to molecular weight control under the condition that the catalyst system is used at the mole ratio of aluminum atom in the component (b)/ titanium atom in the component (a) of 1 to 1000, preferably 5 to 600, and the mole ratio of the component (c)/ aluminum atom in the component (b) of 0.02 to 500, preferably 0.05 to 10, the polymerization temperature is 20 to 150 °C, preferably 50 to 95 °C and the polymerization pressure is atmospheric pressure to 40 Kg/cm²G.

Next, the propylene-α-olefin random copolymer (B) being other component which constitutes the polypropylene composition of the present invention is obtained by polymerizing propylene and α-olefin, and is the propylene-α-olefin random copolymer wherein the content of propylene in the propylene-α-olefin random copolymer (B) is 35 to 75 % by weight and the content of α-olefin is 25 to 65 % by weight.

The content of propylene in the propylene-α-olefin random copolymer (B) is 35 to 75 % by weight, preferably 40 to 70 % by weight. Besides, the content of α-olefin is 25 to 65 %, preferably 30 to 60 % by weight. When the content of propylene is less than 35% by weight, the hot-tack strength is inferior and when the content of propylene is more than 75% by weight, the low temperature heat-sealing property is inferior.

As α-olefin constituting the propylene-α-olefin random copolymer (B), α-olefin used in the crystalline propylene random copolymer (A) can be used similarly. That is, an α-olefin includes an α-olefin having 4 to 10 carbon atoms, for example , butene-1, pentene-1, hexene-1, heptene-1, octene-1, 3-methyl-pentene-1 and the like. Among these, butene-1 is the most preferable. Besides, a small amount of ethylene may be contained within the range not hurting the purpose of the present invention.

A CXS of the propylene-α-olefin random copolymer (B) is 70% or more by weight in view of a low temperature heat-sealing property of the laminated and oriented film obtained.

As the catalyst for preparing the propylene-α-olefin random copolymer (B) of the present invention, the catalyst used in the crystalline propylene random copolymer (A) can be used similarly and the Ziegler-Natta catalyst containing a solid catalyst component wherein titanium, magnesium, halogen and electron donor are essential is used more preferably. And as these catalysts, the solid catalyst component wherein titanium, magnesium, halogen and electron donor are essential and used for preparing the crystalline propylene random copolymer (A) is exemplified, and the catalyst system comprising this solid catalyst component, (b) the organometallic compound and (c) a silicone compound indicated by the general formula R¹R²Si(OR³)₂ (R1 represents an alicyclic hydrocarbon group having 5 to 20 carbon atoms and R², R³ represent hydrocarbon groups having 1 to 20 carbon atoms.) can be mentioned.

The preparation of the copolymer (B) can be performed in both liquid phase and gas phase but it is preferred that the polymerization is performed particularly under the condition that the copolymer dissolves in liquid phase , that is, in the presence of a solvent. In case of performing the polymerization in liquid phase, a solvent method wherein the polymerization is performed in an inactive solvent ,for example, a hydrocarbon such as hexane, heptane and kerosene, an alicyclic hydrocarbon such as cyclohexane and an aromatic hydrocarbon such as benzene, toluene and xylene can be used. Or, a bulk method wherein olefin itself is used as a reaction solvent can be used. Among this, it is most preferred to polymerize in the presence of a solvent.

The copolymer used in the present invention can be performed similarly as a polymerization reaction of olefin using usually the Ziegler-Natta catalyst. The temperature of the copolymerization is selected usually within the range of 30 to 140°C, preferably 50 to 120°C. Besides, the polymerization is preferably performed under pressure and usually preferred to be performed under about normal pressure to 50 Kg/cm². The molecular weight control can be done to a certain degree by changing the polymerization condition such as a polymerization temperature, the rate using the catalyst component and the like, but it is the most effective to add hydrogen in the polymerization system.

As the crystalline propylene polymer (C) in the propylene random copolymer composition of the present invention, a crystalline propylene homopolymer obtained by polymerization of propylene with the Ziegler-Natta catalyst is usually used. However, in certain circumstances, a polymer copolymerizing a small amount ( less than 3% by weight ) of α-olefin (ethylene, butene-1 and the like) may be usable. The melting point of the crystalline propylene polymer (C) measured with DSC is 150 °C or more and preferably 155 °C or more.

Besides, an insoluble part in boiling n-heptane in the polypropylene composition of the present invention is usually detected at the melting peak of crystal derived from the crystalline propylene polymer (C) in a DSC curve obtained by a differential scanning calorie measurement of 152 °C to 168 °C. This melting peak depends on the melting calorie changing in accordance with the inclusion amount of the crystalline propylene polymer (C) and when this peak is not detected, the polypropylene random copolymer composition satisfying antinomic properties such as the solvent resistance and the hot-tack property is difficult to be obtained.

The polypropylene random copolymer composition of the present invention comprises the crystalline propylene random copolymer (A) having a propylene content of 60 to 97 % by weight, an ethylene content of 0 to 6 % by weight and an α-olefin content of 3 to 40 % by weight which is obtained by copolymerization of propylene with α-olefin or propylene with α-olefin and ethylene, the propylene-α-olefin random copolymer (B) having a propylene component content of 35 to 75 % by weight and an α-olefin component content of 25 to 65 % by weight which is obtained by copolymerization of propylene with α-olefin and the crystalline propylene polymer (C). It may be the blend of the crystalline propylene polymer (C), the crystalline propylene random copolymer (A) and the propylene-α-olefin random copolymer (B), or the one being obtained by the copolymerization of propylene with α-olefin or propylene with α-olefin and ethylene after the prepolymerization of propylene or propylene and a small amount of ethylene in advance.

The composition ratio of the crystalline propylene random copolymer (A), the propylene-α-olefin random copolymer (B) and the crystalline propylene polymer (C) in the polypropylene random copolymer composition of the present invention is 73 to 97% by weight, preferably 80 to 95.5% by weight and more preferably 85 to 94.5% by weight of the crystalline propylene random copolymer (A), 2.5 to 17% by weight, preferably 4 to 15% by weight and more preferably 5 to 10 % by weight of the propylene-α-olefin random copolymer (B) and besides, 0.5 to 10% by weight, preferably 0.5 to 5 % by weight and more preferably 0.5 to 2.7 % by weight of the crystalline propylene polymer (C).

When the content of the crystalline propylene random copolymer (A) is less than 73 % by weight, the heat-sealing property becomes insufficient. Besides, when the propylene-α-olefin random copolymer (B) is less than 2.5 % by weight, an improving effect of the hot-tack property at a low temperature range cannot be recognized, and when it exceeds 17 % by weight, the heat-sealing property is improved but the hot-tack property throughout all over the seal becomes worse. On the other hand, when the content of the crystalline propylene polymer (C) is less than 0.5 % by weight, the solvent resistance is in sufficient and when it is more than 10 % by weight, the transparency becomes inferior and it is not preferred that the hot-tack strength is inferior.

Besides, the said composition having 20 % by weight or less of the soluble part in xylene at 20 °C is used. The composition being out of this range has a tendency to difficult to be the polypropylene composition having an excellent film-forming property , an excellent solvent resistance and an excellent hot-tack property without hurting a transparency and a heat-sealing property which is the purpose of the present invention.

The polypropylene composition having the melt flow rate of the range of 1 to 50 g/10min., preferably 2 to 30 g/10min. and more preferably 3 to 20 g/10min. is preferred from the view point of the transparency and a high speed processability at film-forming. Besides, the polypropylene composition being soft and having the intrinsic viscosity measured usually at 135 °C in tetralin of the range of 1 to 3 dl/g is used preferably.

To the random copolymer composition of the present invention, an antioxidant , a neutralizer, a lubricant, an antiblocking agent, an anti-static agent and the like usually used can be blended in accordance with necessity as long as it does not hurt the present invention.

Next, the laminated and oriented film of the present invention is illustrated. The oriented film having the polypropylene composition of the present invention on the surface layer can be film-formed for a long time without hurting a transparency and a heat-sealing property ,that is, a preferable property which polypropylene film has originally and the oriented film having an excellent balance of a solvent resistance and a hot-tack property, and having the surface layer laminated on one side or both side of a film being a base material can be obtained.

The laminated and oriented film of the present invention can be prepared by laminating the above-mentioned polypropylene composition on one side or both side of a film being a base material. As a base material, for example a crystalline α-olefin polymer is used and particularly, the crystalline polypropylene is preferably used. The crystalline polypropylene having usually an insoluble part in boiling heptane of 80 % or more, the intrinsic viscosity ([η]) of 1.3 to 4.2 dl/g and the propylene content of 95 % or more in the polymer can be used preferably. Besides, the crystalline polypropylene may be a copolymer containing ethylene and/or butene-1 components of 5% or less.

The laminated and oriented film of the present invention can be prepared for example, by methods as follows. That is, the laminated and oriented film of the present invention can be prepared by a method passing the base material and a sheet molded in advance with the above-mentioned polypropylene composition through a pressured roll at the same time, a method laminating by painting a solution or a dispersed article wherein the above-mentioned polypropylene composition is dissolved in toluene, a method laminating by coating the above-mentioned polypropylene composition on the base material with a melt-extruding, or a method adhering the above-mentioned polypropylene composition and the base polymer extruded with an extruder in a common die or at an exit while both are in melted state and the like.

The laminated film of the present invention can be used as it is, but the above-mentioned polypropylene composition is preferably oriented with uniaxial or biaxial orientation after the lamination. This laminated and oriented film is prepared by known methods as follows.

That is, there are 1. a method preparing an original laminated sheet with the so-called co-extrusion wherein both are adhered in a die for extrusion molding a sheet or at an exit while both are in melted state and successively orienting biaxially, 2. a method performing an extrusion lamination processing of the above-mentioned polypropylene composition on a base sheet, and successively orienting biaxially, 3. a method orienting uniaxially a base sheet to MD direction with rolls containing a metal roll in a heated state, performing an extrusion lamination processing of the above-mentioned polypropylene composition on the sheet, and successively orienting it to TD direction and the like, but a method 3. is mainly popular among these.

The laminated and oriented film prepared by the above method can be film-formed for a long time without hurting a transparency and a heat-sealing property and has an excellent balance of a solvent resistance and a hot-tack property, and it has an extremely great value for practical uses.

### EXAMPLE

The present invention is illustrated by Examples as follow but the present invention is not limited thereto.

Besides, the measured values of each item mentioned in the Detailed Description of the Invention and the Examples were measured in the following manner.

### (1) The content of butene-1;

It was determined by ¹³C Nuclear Magnetic Resonance spectrum method.

### (2) The content of ethylene;

It was determined by IR spectrum method described in the item " (i) Random copolymer " of Polymer Analysis Handbook (256 pages) ( published by Asakura bookseller's in 1985 ).

### (3) Melt flow rate (MFR);

It was determined according to JIS K7210, condition 14.

### (4) Haze;

It was determined according to JIS K7105.

### (5) Insoluble part in boiling n-heptane

A sheet with a thickness of 1 mm obtained by molding according to JIS K 6758 was put in a cylindrical glass filter as fine samples with about 1 mm x 1 mm x 1 mm and extracted for 14 hrs by Sohxlet extractor. In this case the frequency of reflux was one time / 5 min.. The % by weight of the insoluble part was determined by weighing the insoluble part after drying.

### (6) Meting point ( Tm );

After a test piece of 10 mg was melted for 5 min. at 220 °C under a nitrogen atmosphere by using a differential scanning calorie meter ( manufactured by Perkin Elmer Company , DSC ), it was crystallized by descending temperature until 40 °C
at a descending rate of temperature of 5 °C /min.. After that ,temperature was elevated at a rate of 10 °C/min., and a temperature of the maximum peak of melted endothermic curve obtained was the melting point. Besides , the melting point of indium (In) measured with the present measurement apparatus at a elevation rate of temperature of 10 °C/min. was 156.6 °C.

### (7) Low temperature heat-sealing property( Heat-sealing temperature °C );

Same side of sealant surfaces of two films was piled and heat-sealed by clamping them for 2 seconds under a load of 2kg/cm² with a heat-sealer (manufactured by Toyo Seiki Company ) heated at a fixed temperature . After letting them alone for one night , a sealing temperature wherein a peel resisting strength peeled with a peeling rate of 200mm/min. at 23 °C and a peeling angle of 180 degree became 300 g/25mm was measured and this was the heat-sealing temperature.

### (8) Hot-tack property( g/75 mm);

Same side of sealant surfaces of two films was piled and heat-sealed by clamping them for 2 seconds under a load of 2kg/cm² with a heat-sealer (manufactured by Tester Sangyo Company ) heated at a fixed temperature. Next, a peeling strength was added to the sealing part with a planar spring, immediately after removing a load and a peel strength indicating a peel length of 1/8 inches ( 3.2 mm ) was measured.

### (9) Soluble part in xylene at 20 °C (CXS)( % by weight );

After dissolving perfectly 1g of a sample in 100 ml of boiling xylene , it was lowered to 20 °C and let alone for 4 hrs. Successively, this was separated to a deposit and a solution by filtration, the filtrate was dried up and dried under vacuum at 70 °C. Its weight was measured and % by weight was determined.

### (10) Weight average molecular weight / number average molecular weight (Mw/Mn);

It was measured with gel permeation chromatography (GPC) under the following condition. Besides, a calibration curve was made with a standard polystyrene.

| | |
|---|---|
| Kinds of machines | 150 CV type manufactured by Milipore Waters Company |
| Column | Shodex M/S 80 |
| Measuring temperature | 45°C , solvent o-dichlorobenzene |
| Concentration of a sample | 5 mg/ 8 ml |

Besides, Standards Reference Material 706 (polystyrene of Mw/Mn = 2.1 ) of NBS ( National Bureau of Standard ) was measured by the present condition, and a molecular weight distribution (Mw/Mn) of 2.1 was obtained.

### (11) Film-forming property;

During film-forming, good separation of the film from a vertical orientation roll, with the roll becoming hardly dirty, as judged by inspection with the naked eye, was recorded as O , while good separation from the roll, with the roll becoming a little dirty, was recorded as Δ.

### Reference Example 1

### (a) The synthesis of the organomagnesium compound

After an atmosphere in a 1 l flask with a stirrer, a reflux cooler, a dropping funnel and a thermometer was substituted with argon, 32.0 g of magnesium flake for Grignard was thrown in the flask. To the dropping funnel , 120g of n- butylchloride and 500ml of di-n-butyl ether were fed and the reaction was started by dropping about 30ml to magnesium in the flask. After the start of the reaction, the dropping was continued at 50 °C for 4 hrs and after the dropping, the reaction was continued for 1 hr at 60°C . Successively the reacted solution was cooled to room temperature and a solid mass was separated by filtration. n-Butyl magnesium chloride in di-n-butyl ether was hydrolized with 1 normal sulfuric acid and its concentration was determined by back titration with 1 normal sodium hydroxide by using phenolphthalein as an indicator. The concentration was 2.1 mol/l.

### (b) The synthesis of the solid product

After an atmosphere in a 500 ml flask with a stirrer and a dropping funnel was substituted with argon, 240 ml of hexane, 5.4 g( 15.8mmol) of tetra-n-butoxytitanium and 61.4 g ( 295mmol) of tetraethoxysilane were fed and a homogeneous solution was obtained. Next, 150 ml of the organomagnesium compound synthesized in (a) was dropped gradually from a dropping funnel for 4 hrs with keeping a temperature in the flask at 5 °C. After the dropping, it was stirred further for 1 hr. and successively, solid-liquid separation was done at room temperature. After repeating 3 times washing with 240 ml of hexane it was dried under vacuum and 45.0 g of a brown solid product was obtained. 1% by weight of titanium atom, 33.8 % by weight of ethoxy group and 2.9 % by weight of n-butoxy group were contained in the solid product. Besides, in a broad X-ray diffraction spectrum with Cu-Ka ray of the solid product, no clear diffraction peak was recognized at all and it was amorphous.

### (c) The synthesis of a solid treated with ester

After a 100 ml flask was substituted with argon, 6.5 g of the solid product synthesized in (b) , 16.2 ml of toluene and 4.3 ml (16 mmol) of diisobutylphthalate were added and they were reacted for 1 hr. at 95 °C. (d) The synthesis of the solid catalyst ( a treatment for activation )

After the washing in the above-mentioned (c), 16.2 ml of toluene, 0.36 ml (1.3 mmol) of diisobutylphthalate, 2.2 ml (13mmol) of n-butyl ether and 38.0 ml (346 mmol) of titanium tetrachloride were added in the flask and they were reacted for 3 hr. at 95 °C. After the reaction, solid- liquid separation was done at 95 °C and successively, they were washed twice with 33 ml of toluene at same temperature. A treatment by the above-mentioned mixture of diisobutylphthalate, n-butyl ether and titanium tetrachloride was repeated once more under the same condition, it was washed three times with 33 ml of hexane and 5.0 g of Chinese yellow solid catalyst was obtained. In the solid catalyst, 2.4 % by weight of titanium atom, 18.4 % by weight of magnesium atom and 16.8 % by weight of phthalate were contained.

### (e) The preparing method of a catalyst for prepolymerization of propylene

In a 220 L reaction vessel substituted adequately with nitrogen internally, 97.9 L of butane, 400g of the Chinese yellow solid catalyst obtained as like as Reference Example (d), 2.6 mol of triethylaluminum ( hereinafter, abbreviated as TEA) and 0.384 mol of phenyltrimethoxysilane were added and propylene monomer was reacted at 16°C for 4.7 hrs. and successively, by collecting the catalyst for prepolymerization, removing a solvent and drying at 60 °C for 3 hrs., the catalyst of the prepolymerization ratio (PP/cat.) = 99 g - PP/1g-catalyst was obtained. Ash was removed from a part of this, and the melting point (Tm) with DSC of a polymer kneaded with a roll was 165 °C.

The preparation of the crystalline propylene random copolymer (A-1) By using an inner volume 1000 L fluidized-bed type vessel with a stirrer, the copolymerization of propylene and butene-1 was performed. First of all, circulating nitrogen gas was fed from the lower part of the vessel at a flow rate of 140m³/hr, and successively, 60 kg of the propylene-butene-1 copolymer particle was fed as a use for dispersing the catalyst dried and substituted in advance. The polymer particle was kept in a fluidized state. Pressure was elevated to 12.5 Kg /cm² by propylene and after 142.8 g/hr of the prepolymerization catalyst, 39.2 mmol/ hr of triethylaluminum and 2.95 mmol/ hr of cyclohexylethyldimethoxysilane ( hereinafter, abbreviated as CHEDMS ) were fed to the reaction vessel, hydrogen, propylene and butene-1 were fed while adjusting a concentration of 0.14 % by mol of hydrogen and 21.9 % by mol of butene-1 and the polymerization was started while adjusting the fluidized-bed temperature of 65°C. While keeping the polymer particle at 60 Kg, the polymer particle was taken out successively by a differential pressure to a silo, and after monomers were separated from the polymer particle, 0.0075 L/Kg of methanol and 0.0016 g/Kg of Irganox 1076 (manufactured by Ciba-Geigy Co.) were fed and it was treated with hot nitrogen at 60 °C for 2 hrs. Successively, by drying further with hot nitrogen at 60 °C for 1.5 hrs, 10.6 Kg/hr of a white powdery polymer was obtained.

The polymer was Mw/Mn of 3.3, the intrinsic viscosity [η] measured at 135 °C in tetralin of 2.76 dl/g, the butene-1 content of the copolymer determined by ¹³C Nuclear Magnetic Resonance spectrum method of 22.4 % by weight and CXS of 7.9 % by weight.

### Reference Example 2

(a) The preparing method of a catalyst for polymerization of propylene 150 L of hexane purified adequately was added to a 250 L vessel with a stirrer and after the inside was substituted adequately with nitrogen, 3.2 mol of TEA, 0.32 mol of CHEDMS and 51.8g converted into titanium atom of the solid catalyst obtained in the prescribed Reference Example (d) were added. 2.8 Kg of propylene was added continuously for 2hrs while keeping 25 °C.

The preparation of the crystalline propylene random copolymer(A-2) With using an inner volume 1000 L vessel for polymerization, gas phase polymerization was performed by feeding propylene, ethylene and butene-1 at the hydrogen concentration of the polymerization vessel of 0.22 % by weight while feeding the catalyst component prepared in Reference Example 2 (a) at a mean residential time of 6 hours under the condition that polymerization temperature was 80 °C and polymerization pressure was 18 Kg/cm² and at the same time feeding 5 mmol/hr of CHEDMS ( TEA/CHEDMS=10/1 mole ratio ). The copolymer obtained was 4.4 % by weight of ethylene content , 4.1 % by weight of butene-1, and besides, MFR of 2.1, CXS of 6.8 % by weight and Mw/Mn of 2.9 .

### Reference Example 3

### (a) The preparing method of the catalyst for prepolymerization of propylene

100 ml of hexane purified adequately was added to a 500ml reaction vessel with a stirrer and after the inside was substituted adequately with nitrogen, 1.24mmol of TEA, 0.124 mmol of CHEDMS and 0.01 g converted in titanium atom of the solid catalyst obtained in the prescribed Reference Example 1 (d) were added. While keeping 20°C or less, propylene was added continuously and by adjusting the absorbed amount, the catalyst for prepolymerization of propylene of polypropylene/the solid catalyst =2.4 (weight ratio) was obtained.

The preparation of the propylene-α-olefin random copolymer(B) The propylene-butene-1 copolymer was prepared by a continuous polymerization process with using the solid catalyst obtained in the preparation of the catalyst for prepolymerization of propylene in the fore-mentioned Reference Example. The polymerization reaction was performed continuously in a full-tank state with an inner volume 100 l reaction vessel with a warm water jacket and a stirrer. First of all, concerning feeding the catalyst for prepolymerization to the reactor, 150 l of n-hexane and 27.5 g of TEA for protecting the catalyst were prepared in an inner volume 100 l preparing vessel with a stirrer and 70.5 g of the catalyst for prepolymerization and 27.5 g of TEA were thrown in at the same time, stirred and circulated. The suspended solution was fed continuously to the reactor at a rate of 15 L/hr. Concerning feeding an assistant catalyst to the reactor, TEA was diluted with n-hexane in a inner volume 80 L preparing vessel with a stirrer , and 0.035 Kg/hrs as TEA was fed to the reactor. Concerning feeding monomers to the reactor, first of all, 3.6 Kg/hrs of propylene and 12.9 Kg/hrs of butene-1 was fed continuously to a inner volume 300 L preparing vessel and at the same time n-hexane too was fed in order to keep the preparing vessel at a fixed level. The pressure of this monomer solution was elevated by pumping from the preparing vessel and it was cooled at about - 5 °C. Successively, it was fed continuously to the reaction vessel at a rate of 64 Kg/hrs. Hydrogen was used as a molecular weight modifier and was fed continuously to the reaction vessel by uniting them to the monomer solution line. The temperature of the reaction vessel was kept at 40 °C by adjusting the cooling temperature of the monomer line and the temperature of the warm water jacket . The pressure of the reaction vessel was adjusted to keep 15 Kg/cm². ( A polymer concentration in the reaction vessel was 3.1 % ) The polymerization reaction was stopped by adding a small amount of methanol in a polymer solution extracted from the reaction vessel and unreacted monomers were removed by removing pressure. Furthermore, after it was washed with aqueous alkali, the copolymer was obtained at a rate of 2 Kg/hr by removing solvent with steam in a lot of water. It was dried in a vacuum dryer with heating apparatus. The content of butene-1 measured by ¹³C Nuclear Magnetic Resonance spectrum method was 57.9 % by weight, and the intrinsic viscosity [η] measured at 135 °C in tetralin was 1.6 dl/g. MFR was 5.6 and Mw/Mn was 3.6.

### Example 1

In the crystalline propylene random copolymer (A-1) prepared in Reference Example 1, 0.15 % by weight of calcium stearate, 0.1 % by weight of Sumilizer BHT, 0.05 % by weight of Irganox 1010 and 2,5-dimethyl-2,5-di(tert- butylperoxy)hexane were added and after they were mixed with a Henschel mixer, they were granulated to be pelletized while being decomposed by a peroxide with a 40mm Ø extruder. The MFR of the pellet obtained was 6.7. 94% by weight of the pellet obtained, 5% by weight of the propylene-α-olefin random copolymer(B) obtained in Reference Example 3 and 1% by weight of homopolypropylene (intrinsic viscosity = 1.83 dl/g, MFR = 5.1) as the crystalline homopolymer (C) were mixed with the Henschel mixer, granulated and pelletized similarly with the 40mm Ø extruder. Thus the polypropylene random copolymer composition illustrated in Table 1 was obtained. Next, Sumitomo Noblen FS 2011D (manufactured by Sumitomo Chemical Company, MFR = 2.5 g/10min.) as a base material layer and the above-mentioned pellet as a heat-sealing layer of the surface were used and the laminated and oriented film with 3 layers of 2 kinds was obtained with a tenter type stretching machine. This base material layer at the resin temperature of 257°C and the heat-sealing layer at the resin temperature of 222°C were melt-kneaded and solidified in a sheet having 0.9 mm in thickness by cooling rapidly with a cooling roll of 30°C. Successively, after preheating, it was stretched by quintuple to a vertical direction at 120°C by the peripheral speed difference of a vertical stretching machine and successively, by octuple to a horizontal direction at 157°C. Heat treatment was performed at 165°C and the laminated and oriented film with 3 layers of 2 kinds having the sealant thickness of 1µm and the base material thickness of 20µm was obtained without an inferior film-forming owing to an adhesion to the roll for even a long time. The film-forming property, the heat-sealing temperature, the hot-tack strength and the transparency (haze) of the film obtained were illustrated in Table 2.

### Example 2

An evaluation was performed in like manner as Example 1 except changing the mixing ratio of the crystalline propylene random copolymer (A-1), the propylene-α-olefin random copolymer(B) and the polypropylene random copolymer composition illustrated in Table 1 was obtained . The evaluation result was illustrated in Table 2.

### Example 3

In the crystalline propylene random copolymer (A-2) prepared in Reference Example 2, 0.1 % by weight of calcium stearate, 0.2 % by weight of Sumilizer BHT, 0.05 % by weight of Irganox 1010 and 2,5-dimethyl-2,5-di(tert-butylperoxy)hexane were added and after they were mixed with a Henschel mixer, they were granulated to be pelletized while being decomposed by a peroxide with a 40mm Ø extruder. The MFR of the pellet obtained was 5.9. 84 % by weight of the pellet obtained, 15 % by weight of the propylene-α-olefin random copolymer (B) used in Example 1
and 1 % by weight of the crystalline homopolymer (C) were mixed with the Henschel mixer, granulated and pelletized similarly with the 40mm Ø extruder. Thus the polypropylene random copolymer composition illustrated in Table 1 was obtained . The evaluation result was illustrated in Table 2.

### Comparative Example 1

A sample of the crystalline propylene random copolymer (A-1) was evaluated and the evaluation result was illustrated in Table 2.

### Comparative Example 2

An evaluation was performed in the same manner as in Example 1 except using the crystalline propylene random copolymer (A·1) obtained in Reference Example 1 and the propylene-α-olefin random copolymer (B) obtained in Reference Example 3 and changing their mixing ratio, and the polypropylene random copolymer composition illustrated in Table 1 was obtained . The evaluation result was illustrated in Table 2.

### Comparative Example 3

An evaluation was performed in like manner as Example 1 except eliminating the crystalline homopolymer (C) , and the polypropylene random copolymer composition illustrated in Table 1 was obtained. The evaluation result was illustrated in Table 2.

When the composition of copolymer and the composition of compositions are out of the range of the present invention , the balance of a film-forming property , a transparency , a low temperature heat-sealing property and a solvent resistance with a hot-tack property is inferior and the purpose of the present invention cannot be attained.

According to the present invention, there are provided a polypropylene composition having an excellent film-forming property and giving a laminated and orientated film having an excellent balance of a solvent resistance with a hot-tack property, and a laminated and oriented film having this composition on a surface layer can be obtained.

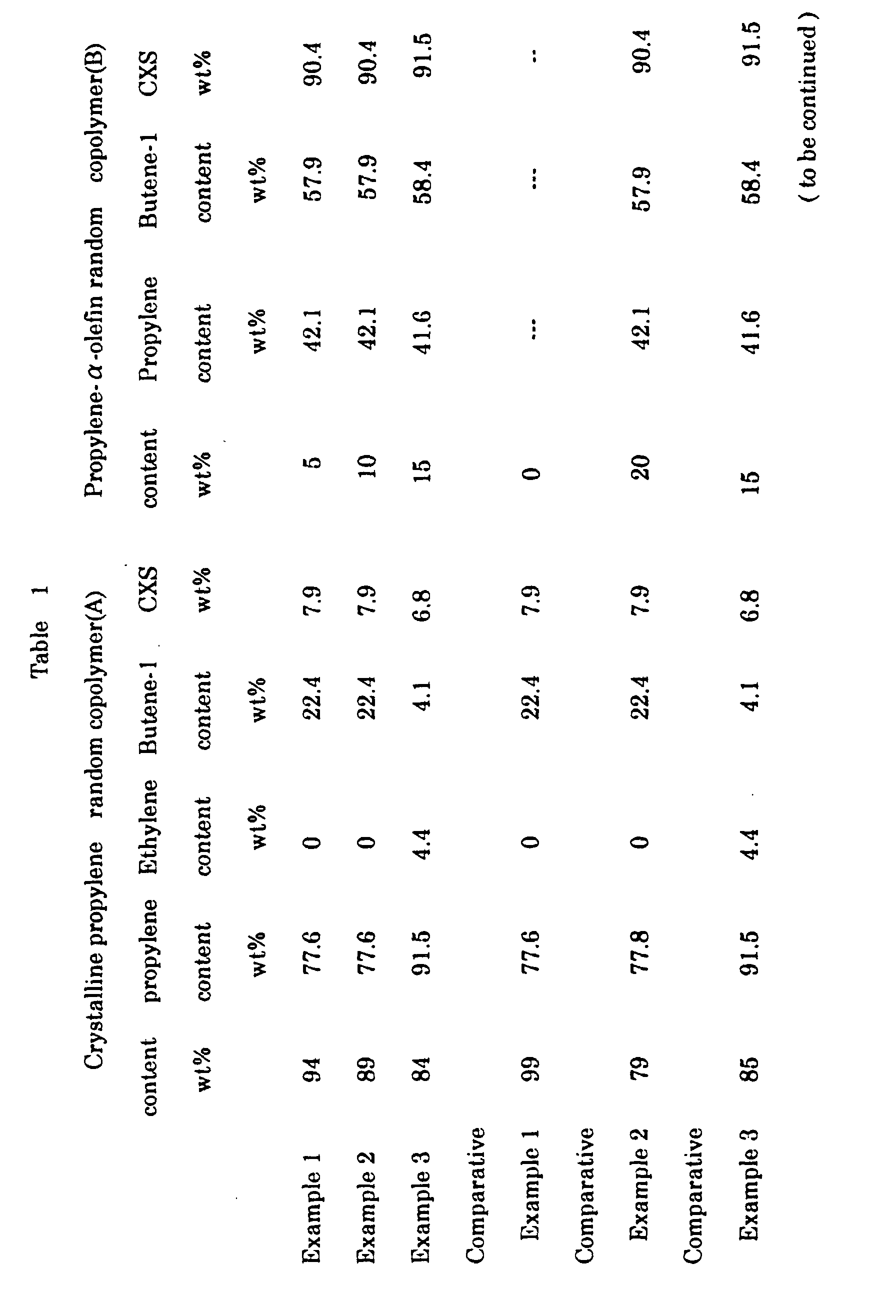

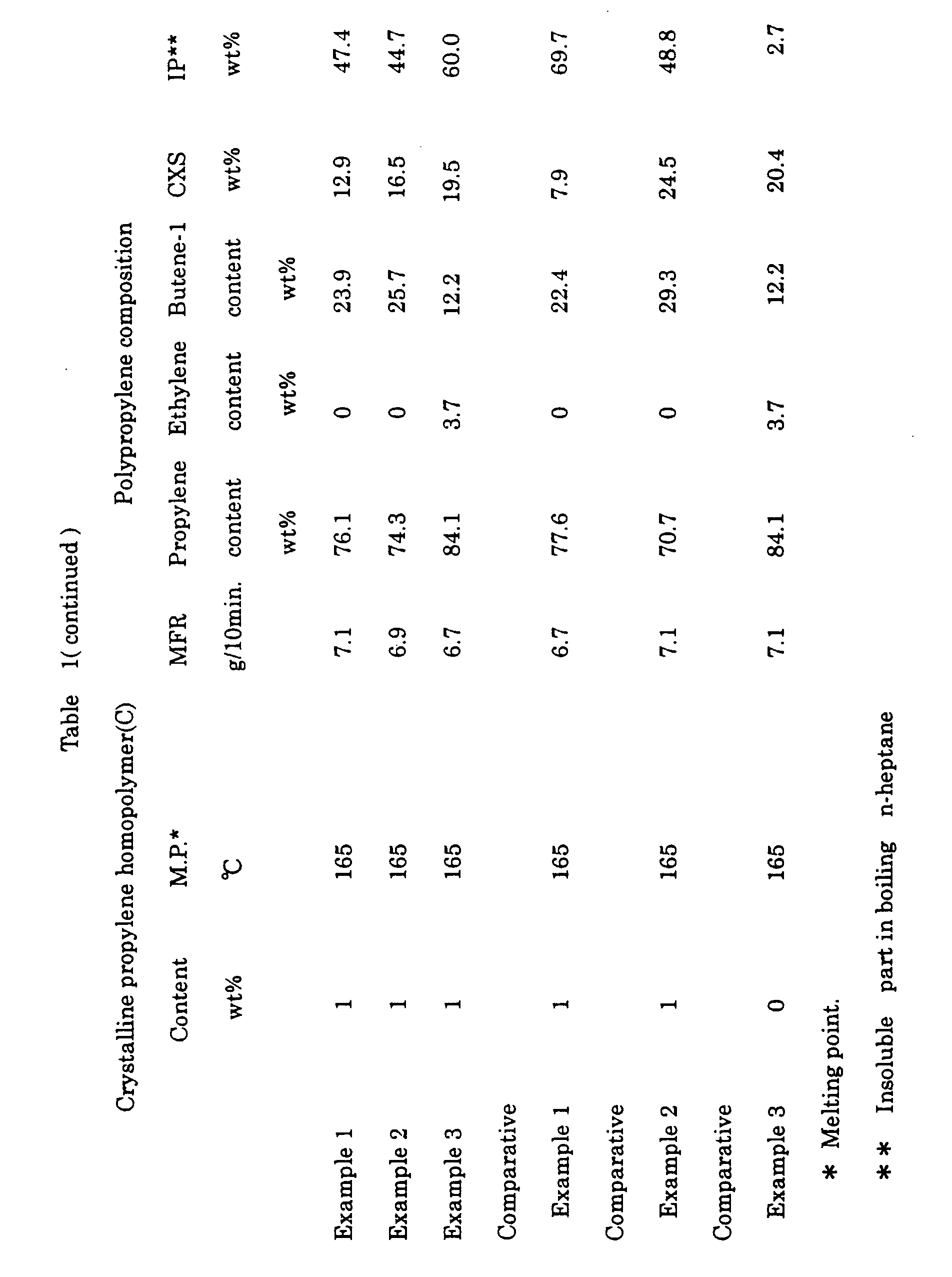

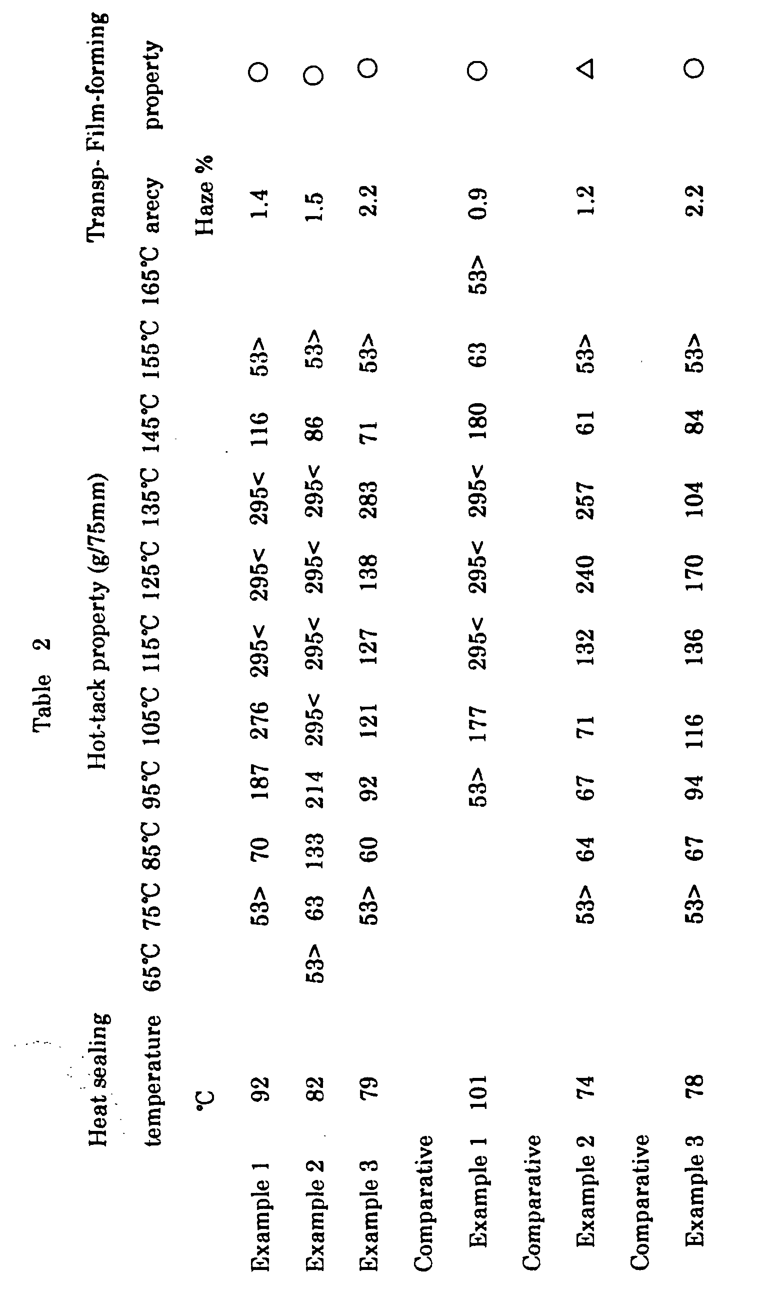

## Claims

1. A polypropylene composition for a laminated and oriented film comprising:
(A) 73 to 97% by weight of a crystalline propylene random copolymer having a propylene content of 60 to 97% by weight, an ethylene content of 0 to 6% by weight, a content of an α-olefin having 4 to 10 carbon atoms of 3 to 40% by weight, a soluble part in xylene at 20°C of 25% by weight or less; wherein the crystalline propylene random copolymer is obtainable by polymerising propylene and the α-olefin, or by polymerising propylene, ethylene and the α-olefin, in a gas phase using a solid catalyst component containing Ti, Mg, a halogen atom and an electron-donator as essential components,
(B) 2.5 to 17% by weight of a propylene-α-olefin random copolymer having a propylene content of 35 to 75% by weight, a content of an α-olefin having 4 to 10 carbon atoms of 25 to 65% by weight, and a soluble part in xylene at 20°C of more than 70% by weight, and
(C) 0.5 to 10% by weight of a crystalline propylene polymer having a melting point measured with DSC of 150°C or more, wherein the crystalline propylene polymer (C) is a crystalline propylene homopolymer or crystalline propylene copolymer having an ethylene or but-1-ene content of less than 3% by weight;
wherein the polypropylene composition has 20% by weight or less of soluble part in xylene at 20°C.

2. The polypropylene composition according to Claim 1, wherein the propylene content, ethylene content and α-olefin content in the crystalline propylene random copolymer (A) are 65 to 92%, 0 to 5% and 3 to 35% by weight, respectively.

3. The polypropylene composition according to Claim 1 or Claim 2, wherein the α-olefin in the crystalline propylene random copolymer (A) and the propylene-α-olefin random copolymer (B) is but-1-ene.

4. A polypropylene composition according to any of Claims 1 - 3, wherein the propylene-α-olefin random copolymer (B) is obtainable by copolymerisation of propylene with the α-olefin in the presence of a solvent using a catalyst system composed of a solid catalyst component wherein Ti, Mg, a halogen atom and an electron-donator are essential components.

5. A laminated and oriented film, having a layer of the polypropylene composition as defined in any of Claims 1-4 as a surface layer.

6. A laminated and oriented film obtained by laminating a polypropylene composition for a laminated and oriented film as defined in any of Claims 1 - 4 on at least one surface of a crystalline polypropylene film and orienting the resulting laminate.

## Patentansprüche

1. Polypropylenmasse für eine laminierte und orientierte Folie, umfassend:
(A) 73 bis 97 Gew.-% eines kristallinen statistischen Propylencopolymers mit einem Propylengehalt von 60 bis 97 Gew.-%, einem Ethylengehalt von 0 bis 6 Gew.-%, einem Gehalt an α-Olefin mit 4 bis 10 Kohlenstoffatomen von 3 bis 40 Gew.-%, einem in Xylol bei 20°C löslichen Teil von 25 Gew.-% oder weniger; wobei das kristalline statistische Propylencopolymer durch Polymerisieren von Propylen und dem α-Olefin oder durch Polymerisieren von Propylen, Ethylen und dem α-Olefin in einer Gasphase unter Verwendung eines festen Katalysatorbestandteils, der Ti, Mg, ein Halogenatom und einen Elektronendonor als wesentliche Bestandteile enthält, erhältlich ist,
(B) 2,5 bis 17 Gew.-% eines statistischen Propylen-α-Olefin-Copolymers mit einem Propylengehalt von 35 bis 75 Gew.-%, einem Gehalt an α-Olefin mit 4 bis 10 Kohlenstoffatomen von 25 bis 65 Gew.-% und einem in Xylol bei 20°C löslichen Teil von mehr als 70 Gew.-%, und
(C) 0,5 bis 10 Gew.-% eines kristallinen Propylenpolymers mit einem Schmelzpunkt, gemessen mit DSC, von 150°C oder mehr, wobei das kristalline Propylenpolymer (C) ein kristallines Propylenhomopolymer oder ein kristallines Propylencopolymer mit einem Ethylen- oder But-1-en-Gehalt von weniger als 3 Gew.-% ist;
wobei die Polypropylenmasse 20 Gew.-% oder weniger des in Xylol bei 20°C löslichen Teils aufweist.

2. Polypropylenmasse nach Anspruch 1, in der der Propylengehalt, Ethylengehalt und α-Olefingehalt im kristallinen statistischen Propylencopolymer (A) 65 bis 92 Gew.-%, 0 bis 5 Gew.-%, bzw. 3 bis 35 Gew.-% betragen.

3. Polypropylenmasse nach Anspruch 1 oder 2, in der das α-Olefin in dem kristallinen statistischen Propylencopolymer (A) und dem statistischen Propylen-α-Olefin-Copolymer (B) But-1-en ist.

4. Polypropylenmasse nach einem der Ansprüche 1 bis 3, in der das statistische Propylen-α-Olefin-Copolymer (B) durch Copolymerisation von Propylen mit dem α-Olefin in Gegenwart eines Lösungsmittels unter Verwendung eines Katalysatorsystems erhalten wird, bestehend aus einem festen Katalysatorbestandteil, in dem Ti, Mg, ein Halogenatom und ein Elektronendonor wesentliche Bestandteile sind.

5. Laminierte und orientierte Folie mit einer Schicht aus der Polypropylenmasse nach einem der Ansprüche 1 bis 4 als Oberflächenschicht.

6. Laminierte und orientierte Folie, erhalten durch Laminieren einer Polypropylenmasse für eine laminierte und orientierte Folie nach einem der Ansprüche 1 bis 4 auf mindestens eine Oberfläche einer kristallinen Polypropylenfolie und Orientieren des erhaltenen Laminats.

## Revendications

1. Composition de polypropylène destinée à un film stratifié et orienté, comprenant :
(A) 73 à 97 % en poids d'un copolymère atactique cristallin de propylène ayant une teneur en propylène de 60 à 97 % en poids, une teneur en éthylène de 0 à 6 % en poids, une teneur en une α-oléfine ayant 4 à 10 atomes de carbone de 3 à 40 % en poids, une partie soluble dans le xylène à 20°C de 25 % en poids ou moins ; où le copolymère atactique cristallin de propylène est susceptible d'être obtenu par polymérisation de propylène et de l'α-oléfine, ou par polymérisation de propylène, d'éthylène et de l'α-oléfine, dans une phase gazeuse en utilisant un composant catalyseur solide contenant Ti, Mg, un atome d'halogène et un donneur d'électrons comme composants essentiels,
(B) 2,5 à 17 % en poids d'un copolymère atactique de propylène-α-oléfine ayant une teneur en propylène de 35 à 75 % en poids, une teneur en une α-oléfine ayant 4 à 10 atomes de carbone de 25 à 65 % en poids et une partie soluble dans le xylène à 20°C de plus de 70 % en poids, et
(C) 0,5 à 10 % en poids d'un polymère cristallin de propylène ayant un point de fusion mesuré par DSC de 150°C ou plus, où le polymère cristallin de propylène (C) est un homopolymère cristallin de propylène ou un copolymère cristallin de propylène ayant une teneur en éthylène ou but-1-ène de moins de 3 % en poids ;
où la composition de polypropylène a 20 % en poids ou moins d'une partie soluble dans le xylène à 20°C.

2. Composition de polypropylène selon la revendication 1, où la teneur en propylène, la teneur en éthylène et la teneur en α-oléfine dans le copolymère atactique cristallin de propylène (A) sont respectivement de 65 à 92 %, de 0 à 5 % et de 3 à 35 % en poids.

3. Composition de polypropylène selon la revendication 1 ou la revendication 2, où l'α-oléfine dans le copolymère atactique cristallin de propylène (A) et le copolymère atactique de propylène-α-oléfine (B) est le but-1-ène.

4. Composition de polypropylène selon l'une quelconque des revendications 1 à 3, où le copolymère atactique de propylène-α-oléfine (B) est susceptible d'être obtenu par copolymérisation de propylène avec l'α-oléfine en présence d'un solvant en utilisant un système de catalyseur composé d'un composant catalyseur solide où Ti, Mg, un atome d'halogène et un donneur d'électrons sont les composants essentiels.

5. Film stratifié et orienté, ayant une couche de la composition de polypropylène selon l'une quelconque des revendications 1 à 4 comme couche superficielle.

6. Film stratifié et orienté obtenu par stratification d'une composition de polypropylène destinée à un film stratifié et orienté selon l'une quelconque des revendications 1 à 4, sur au moins une surface d'un film de polypropylène cristallin et orientation du stratifié obtenu.
